# EUROPEAN PATENT APPLICATION

(11) **EP 4 838 625 A1**
(43) Date of publication of application: **11.11.2026**
(21) Application number: 25858426.7
(22) Date of filing: 14.05.2025
(51) Int. Cl.: H01M 10/613

(54) **HEAT EXCHANGE ASSEMBLY, BATTERY APPARATUS, ELECTRIC DEVICE AND ENERGY STORAGE DEVICE**

(30) Priority: 26.08.2024 CN 202422077327 U
(71) Applicant: Contemporary Amperex Technology Co., Limited, Ningde, Fujian 352100 (CN)
(72) Inventor: SONG, Feiting, Ningde, Fujian 352100 (CN); ZHAI, Xuan, Ningde, Fujian 352100 (CN); WU, Qiaoyun, Ningde, Fujian 352100 (CN)
(74) Representative: Aera A/S
(86) International application number: PCT/CN2025/094775
(87) International publication number: WO 2026/045376

(57) **Abstract**

Embodiments of the present disclosure provide a heat exchange assembly, a battery apparatus, an electric device, and an energy storage device. The battery apparatus comprises a case assembly, a battery cell assembly, and a heat exchange assembly. The battery cell assembly is arranged in the case assembly. The heat exchange assembly is used for heat exchange with the battery cell assembly. The heat exchange assembly comprises rigid connectors and at least two flexible members, wherein the at least two flexible members are stacked, a heat exchange flow channel is formed between the flexible members, and the heat exchange flow channel is used for conducting a heat exchange medium. Each rigid connector is provided with a connection channel, the rigid connectors are connected to the flexible members, and the connection channels are communicated with the heat exchange flow channel. The heat exchange assembly of the battery apparatus provided in the embodiments of the present disclosure can be communicated with the outside by means of the rigid connectors, thereby realizing heat exchange with the battery cell assembly; moreover, the energy density of the battery apparatus can be improved, and the degree of fit between the heat exchange assembly and the case assembly and/or the battery cell assembly can also be improved, thereby improving the heat exchange efficiency and heat exchange effect of the heat exchange assembly.

## Description

### CROSS-REFERENCE TO RELATED APPLICATIONS

The present disclosure is filed based on, and claims priority to, Chinese Patent Application No. 202422077327.0, filed on August 26, 2024 and entitled "Heat Exchange Assembly, Battery Apparatus, Electric Device, and Energy Storage Device", the entire content of which is hereby incorporated herein by reference.

### TECHNICAL FIELD

The present disclosure relates to the technical field of battery apparatuses, and in particular, to a heat exchange assembly, a battery apparatus, an electric device, and an energy storage device.

### BACKGROUND

This part is intended to provide background or context for implementations of the present disclosure. The descriptions herein are not admitted to be the prior art merely because the descriptions are included in this part.

In new energy vehicles equipped with a battery, the battery can be used to provide all or part of power. During use of the battery, battery cells in the battery generate heat. Excessive heat adversely affects performance and service life of the battery. Therefore, how to effectively dissipate heat of the battery cells of the battery has become an important research direction in the field.

### SUMMARY

In view of this, embodiments of the present disclosure are intended to provide a heat exchange assembly, a battery apparatus, an electric device, and an energy storage device, to resolve a technical problem of how to improve a heat exchange effect.

To this end, a first aspect of the embodiments of the present disclosure provides a battery apparatus, comprising:
a case assembly;
a battery cell assembly arranged in the case assembly; and
a heat exchange assembly configured to exchange heat with the battery cell assembly, wherein
the heat exchange assembly comprises a rigid connector and at least two flexible members, the at least two flexible members are stacked, a heat exchange flow channel is formed between the flexible members, and the heat exchange flow channel is configured to conduct a heat exchange medium; and the rigid connector is provided with a connection channel, the rigid connector is connected to the flexible members, and the connection channel is communicated with the heat exchange flow channel.

The battery apparatus provided in the embodiments of the present disclosure comprises a case assembly, a battery cell assembly, and a heat exchange assembly. The battery cell assembly is arranged in an accommodating cavity of the case assembly, and the case assembly protects the battery cell assembly. The heat exchange assembly is provided with a rigid connector and at least two flexible members, and the rigid connector is connected to the flexible members, so that the connection channel is communicated with the heat exchange flow channel. In other words, the heat exchange assembly can be communicated with the outside through the rigid connector, allowing the heat exchange medium to enter the heat exchange flow channel through the connection channel, thereby implementing heat exchange with the battery cell assembly. In addition, the heat exchange assembly is configured to comprise the flexible members, and the flexible members are lightweight, which helps reduce the mass of the battery apparatus, reducing production costs of the heat exchange assembly, and helping improve energy density of the battery apparatus. Furthermore, the flexible member is of a flexible structure, which allows the heat exchange assembly to better fit with the case assembly and/or the battery cell assembly, thereby helping absorb an assembly tolerance of the heat exchange assembly without using a gap filler or a thermally conductive material. This increases a fit degree between the heat exchange assembly and the case assembly and/or the battery cell assembly, and increases an effective heat exchange area between the heat exchange assembly and the case assembly and/or the battery cell assembly, thereby improving heat exchange efficiency and a heat exchange effect of the heat exchange assembly.

In some embodiments, the flexible member is formed with a connection port communicated with the heat exchange flow channel, and the rigid connector is hot-press connected to the inner wall of the flexible member located at the edge of the connection port.

In the embodiments, the rigid connector is hot-press connected to the inner wall of the flexible member located at the edge of the connection port, to implement a sealed connection between the rigid connector and the flexible member. This connection structure is simple and reliable. In addition, the rigid connector can be hot-press connected to the inner wall of the flexible member located at the edge of the connection port while the flexible member forms the heat exchange flow channel through hot pressing, thereby reducing assembly steps and improving assembly efficiency.

In some embodiments, the flexible member is formed with a connection port communicated with the heat exchange flow channel, the rigid connector comprises a connection main body and a connection ring, at least a portion of the connection ring is arranged in the heat exchange flow channel, and the connection ring is connected to the inner wall of the flexible member located at the edge of the connection port.

In the embodiments, the rigid connector is configured to comprise the connection main body and the connection ring, and the connection main body and the connection ring together form the connection channel. This facilitates connection of the rigid connector to the flexible member through the connection ring, improves assembly efficiency of the connection between the rigid connector and the flexible member, and is applicable to a rigid connector with a complex structure.

In some embodiments, the connection ring is hot-press connected to the inner wall of the flexible member located at the edge of the connection port.

In the embodiments, the connection ring is hot-press connected to the inner wall of the flexible member located at the edge of the connection port, to implement a sealed connection between the connection ring and the flexible member. This connection structure is simple and reliable. In addition, the connection ring can be hot-press connected to the inner wall of the flexible member located at the edge of the connection port while the flexible member forms the heat exchange flow channel through hot pressing, thereby reducing assembly steps and improving assembly efficiency.

In some embodiments, an end of the connection main body extends into the connection ring and is connected to the connection ring.

This facilitates connection of the rigid connector to the flexible member through the connection ring and connection of the rigid connector to the connection ring through the connection main body, thereby implementing connection between the rigid connector and the flexible member.

In some embodiments, an end of the connection main body extends into the connection ring and is welded and/or adhesively connected to the connection ring.

In the embodiments, an end of the connection main body extends into the connection ring and is welded and/or adhesively connected to the connection ring. This connection manner is simple and reliable.

In some embodiments, a flange is formed on a circumferential side wall of the connection main body, and the flexible members are sandwiched between the flange and the connection ring.

In the embodiments, the flange is formed on the circumferential side wall of the connection main body, and the flexible members are sandwiched between the flange and the connection ring. In this way, the flange can cooperate with the connection ring to sandwich the flexible members therebetween, thereby further improving connection reliability between the rigid connector and the flexible member. In addition, in a process of connecting the connection main body and the connection ring, the flange can play a positioning role, thereby improving assembly efficiency.

In some embodiments, the flange is connected to the flexible member.

In the embodiments, the flange is connected to the flexible member, so that sealing performance between the rigid connector and the flexible member can be improved while connection reliability between the rigid connector and the flexible member is improved.

In some embodiments, the flange is hot-press connected and/or adhesively connected to the flexible member.

In the embodiments, the flange is hot-press connected to the outer wall of the flexible member located at the edge of the connection port, facilitating a sealed connection between the flange and the flexible member. This connection structure is simple and reliable. In addition, the flange can be hot-press connected to the outer wall of the flexible member located at the edge of the connection port while the flexible member forms the heat exchange flow channel through hot pressing, thereby reducing assembly steps and improving assembly efficiency.

In the embodiments, the flange is adhesively connected to the outer wall of the flexible member located at the edge of the connection port, facilitating a sealed connection between the flange and the flexible member. This connection structure is simple and reliable.

In some embodiments, the difference obtained by subtracting the outer diameter of the connection ring from the outer diameter of the flange is 0.2 mm to 30 mm.

In the embodiments, the difference obtained by subtracting the outer diameter of the connection ring from the outer diameter of the flange is set to 0.2 mm to 30 mm, which facilitates connection between the flange and the flexible member, and can reduce space occupied by the rigid connector as much as possible. In other words, connection reliability between the rigid connector and the flexible member and a decrease in occupied space can be balanced.

In some embodiments, the difference obtained by subtracting the outer diameter of the connection ring from the outer diameter of the flange is 2 mm to 5 mm.

In the embodiments, connection reliability between the rigid connector and the flexible member and a decrease in occupied space can be further balanced.

In some embodiments, in the radial direction of the connection ring, the dimension of a connection region between the connection ring and the flexible member is greater than or equal to 0.2 mm.

In the embodiments, in the radial direction of the connection ring, the dimension of the connection region between the connection ring and the flexible member is set to be greater than or equal to 0.2 mm, which helps improve connection reliability between the connection ring and the flexible member.

In some embodiments, in the radial direction of the connection ring, the dimension of the connection region between the connection ring and the flexible member is 1 mm to 30 mm.

In the embodiments, in the radial direction of the connection ring, the dimension of the connection region between the connection ring and the flexible member is set to 1 mm to 30 mm, which helps improve connection reliability between the connection ring and the flexible member, and can reduce space occupied by the connection ring in the heat exchange flow channel as much as possible, thereby improving heat exchange efficiency. In other words, connection reliability between the connection ring and the flexible member and a decrease in occupied space can be balanced.

In some embodiments, an end of the connection main body extends into the connection ring and is connected to an inner side wall of the connection ring; and the dimension of the connection main body extending into the connection ring is greater than or equal to 0.2 mm to 20 mm.

In the embodiments, the dimension of the connection main body extending into the connection ring is set to 0.2 mm to 20 mm, which facilitates connection between the connection main body and the connection ring, and can reduce space occupied by the connection ring in the heat exchange flow channel as much as possible, thereby improving heat exchange efficiency. In other words, connection reliability between the connection main body and the connection ring and a decrease in occupied space can be balanced.

In some embodiments, a portion of the inner side wall of the connection ring extends inward in the radial direction to form a step, and an end portion of the connection main body abuts against the step.

In the embodiments, the step is formed in the connection ring, the end portion of the connection main body abuts against the step. In this way, the end portion of the connection main body can be connected to the step, thereby further improving connection reliability between the connection main body and the connection ring. In addition, in a process of connecting the connection main body and the connection ring, the step can play a positioning role, thereby improving assembly efficiency.

In some embodiments, in the radial direction of the connection ring, the dimension of the step is 0.2 mm to 10 mm.

In the embodiments, in the radial direction of the connection ring, the dimension of the step is set to 0.2 mm to 10 mm, which facilitates connection between the connection main body and the connection ring and structural strength of the step, and can reduce space occupied by the step in the heat exchange flow channel as much as possible, thereby improving heat exchange efficiency. In other words, connection reliability between the connection main body and the connection ring and a decrease in occupied space can be balanced.

In some embodiments, in the radial direction of the connection ring, the dimension of the step is 0.5 mm to 3 mm.

This helps further balance connection reliability of the connection main body and the connection ring and a decrease in occupied space.

In some embodiments, in a direction perpendicular to the radial direction of the connection ring, the dimension of the step is 0.2 mm to 10 mm.

This not only helps make the step have certain structural strength, but also can reduce space occupied by the step in the heat exchange flow channel as much as possible, thereby improving heat exchange efficiency. In other words, structural strength of the step and a decrease in occupied space can be balanced.

In some embodiments, in the direction perpendicular to the radial direction of the connection ring, the dimension of the step is 1 mm to 3 mm.

This helps further balance structural strength of the step and a decrease in occupied space.

In some embodiments, the end portion of the connection main body is welded and/or adhesively connected to the step.

In the embodiments, an end of the connection main body extends into the connection ring and is welded to the connection ring. This connection manner is simple and reliable.

Certainly, in some other implementations, the connection main body may be adhesively connected to the connection ring.

In some embodiments, the connection main body comprises a first connection segment and a second connection segment, an extension direction of the first connection segment is perpendicular to the radial direction of the connection ring, an extension direction of the second connection segment is perpendicular to the extension direction of the first connection segment, and the first connection segment is connected to the connection ring.

In the embodiments, the rigid connector can be configured to comprise the connection main body and the connection ring, and the connection main body and the connection ring jointly form the connection channel. This facilitates connection of the rigid connector to the flexible member through the connection ring and connection of the rigid connector to the connection ring through the connection main body, thereby implementing connection between the rigid connector and the flexible member. This improves assembly efficiency of the connection between the rigid connector and the flexible member, and is applicable to a rigid connector with a complex structure.

In some embodiments, a flange is formed on a circumferential side wall of the rigid connector, and the flange is connected to the outer wall of the flexible member located at the edge of the connection port.

In the embodiments, the flange is formed on the circumferential side wall of the rigid connector, so that the flange can play a positioning role in a process of connecting the rigid connector to the flexible member, thereby improving assembly efficiency. In addition, the flange is connected to the outer wall of the flexible member located at the edge of the connection port, which helps improve connection reliability between the rigid connector and the flexible member.

In some embodiments, the at least two flexible members are configured as metal plasticized films.

In the embodiments, because the metal plasticized film is thin and lightweight, and because a flow channel region is formed between the at least two metal plasticized films, the flow channel region is not constrained by an extrusion process and does not require a large thickness. Therefore, the overall thickness and weight of the heat exchange assembly can be reduced. The heat exchange assembly does not react with the heat exchange medium flowing inside, and thus there is no risk of corrosion or leakage.

In some embodiments, the at least two flexible members are configured as aluminum-plastic films.

The aluminum-plastic film has a high barrier property, good cold-stamping formability, puncture resistance, stability against electrolyte solution, and an electrical insulation property.

In some embodiments, the flexible member is of a layered structure, the flexible member comprises a metal layer and a non-metal layer, and the metal layer and the non-metal layer are sequentially stacked.

In the embodiments, the flexible member comprising the metal layer and the non-metal layer sequentially stacked is thin and lightweight, and by forming a flow channel region between the at least two flexible members, the flow channel region is not constrained by an extrusion process and does not require a large thickness. Therefore, the overall thickness and weight of the heat exchange assembly can be reduced. Furthermore, the heat exchange assembly does not react with the heat exchange medium flowing inside, and thus there is no risk of corrosion or leakage.

In some embodiments, the metal layer comprises one or a plurality of aluminum foil, copper foil, and steel foil.

This can make the flexible member have certain structural strength and can play an isolation role.

In some embodiments, the non-metal layer comprises one or a plurality of polypropylene, polyvinyl chloride, and polyethylene.

This can make the flexible member have a certain waterproof function.

In some embodiments, the non-metal layer is a hot-melt layer.

Here, the non-metal layer is configured as a hot-melt layer, that is, made of a hot-melt material, which facilitates bonding the non-metal layer to the metal layer through hot melting, resulting in simple molding and high production efficiency.

In some embodiments, the flexible member is of a layered structure, the flexible member comprises a corrosion-resistant layer, an isolation layer, and a waterproof layer that are sequentially arranged, and the waterproof layer is closer to a flow channel region than the corrosion-resistant layer.

In the embodiments, the flexible member is configured to comprise the corrosion-resistant layer, the isolation layer, and the waterproof layer that are sequentially arranged, and the waterproof layer is closer to the flow channel region than the corrosion-resistant layer, which helps improve reliability of the heat exchange assembly.

In some embodiments, the thickness of the isolation layer is 6.5 µm to 100 µm.

In the embodiments, by setting the thickness of the isolation layer to 6.5 µm to 100 µm, the flexible member can be made to have certain structural strength and flexibility.

In some embodiments, the thickness of the isolation layer is 6.5 µm to 15 µm.

In the embodiments, by setting the thickness of the isolation layer to 6.5 µm to 15 µm, the flexible member can further be made to have certain structural strength and flexibility.

In some embodiments, the thickness of the corrosion-resistant layer is 5 µm to 20 µm.

In the embodiments, by setting the thickness of the corrosion-resistant layer to 5 µm to 20 µm, wear resistance and toughness of the flexible member can be improved.

In some embodiments, the thickness of the waterproof layer is 50 µm to 120 µm.

In the embodiments, the thickness of the waterproof layer is set to 50 µm to 120 µm, which can not only make the waterproof layer have certain structural strength to improve waterproof performance thereof, but also facilitate hot-press connection of the flexible member through the waterproof layer.

In some embodiments, the thickness of the flexible member is 0.05 mm to 0.3 mm.

The thickness of the flexible member is set to 0.05 mm to 0.3 mm, so that the overall thickness of the heat exchange assembly is made to be small while the heat exchange assembly made of the flexible member has certain structural strength, which helps reduce the overall volume and weight of the battery to increase energy density of the battery.

In some embodiments, the thickness of the flexible member is 0.08 mm to 0.2 mm.

The thickness of the flexible member is set to 0.08 mm to 0.2 mm, so that the overall thickness of the heat exchange assembly is further made to be small while the heat exchange assembly made of the flexible member has certain structural strength, which helps further reduce the overall volume and weight of the battery to further increase energy density of the battery.

In some embodiments, the elastic modulus of the flexible member is 0.1 MPa to 10,000 MPa.

In the embodiments, the elastic modulus of the flexible member is set to 0.1 Mpa to 10,000 Mpa. This makes the flexible member not only have certain structural strength to improve reliability of the heat exchange assembly, but also have certain deformation capability to increase a fit degree between the heat exchange assembly and the case assembly and/or a battery assembly the battery cell assembly, thereby increasing an effective heat exchange area between the heat exchange assembly and the case assembly and/or the battery assembly the battery cell assembly, and improving heat exchange efficiency and a heat exchange effect of the heat exchange assembly.

A second aspect of the embodiments of the present disclosure provides a heat exchange assembly, and the heat exchange assembly is the heat exchange assembly of the foregoing battery apparatus, and the heat exchange assembly is configured to exchange heat with the battery cell assembly.

The heat exchange assembly provided in the embodiments of the present disclosure is provided with a rigid connector and at least two flexible members, and the rigid connector is connected to the flexible members, so that the connection channel is communicated with the heat exchange flow channel. In other words, the heat exchange assembly can be communicated with the outside through the rigid connector, allowing the heat exchange medium to enter the heat exchange flow channel through the connection channel, thereby implementing heat exchange with the battery cell assembly. In addition, the heat exchange assembly is configured to comprise the flexible members, and the flexible members are lightweight, which helps reduce the mass of the battery apparatus, reducing production costs of the heat exchange assembly, and helping improve energy density of the battery apparatus. Furthermore, the flexible member is of a flexible structure, which allows the heat exchange assembly to better fit with the case assembly and/or the battery cell assembly, thereby helping absorb an assembly tolerance of the heat exchange assembly without using a gap filler or a thermally conductive material. This increases a fit degree between the heat exchange assembly and the case assembly and/or the battery cell assembly, and increases an effective heat exchange area between the heat exchange assembly and the case assembly and/or the battery cell assembly, thereby improving heat exchange efficiency and a heat exchange effect of the heat exchange assembly.

A third aspect of the embodiments of the present disclosure provides an electric device, comprising the foregoing battery apparatus or the foregoing heat exchange assembly.

The battery apparatus of the electric device provided in the embodiments of the present disclosure comprises a case assembly, a battery cell assembly, and a heat exchange assembly. The battery cell assembly is arranged in an accommodating cavity of the case assembly, and the case assembly protects the battery cell assembly. The heat exchange assembly is provided with a rigid connector and at least two flexible members, and the rigid connector is connected to the flexible members, so that the connection channel is communicated with the heat exchange flow channel. In other words, the heat exchange assembly can be communicated with the outside through the rigid connector, allowing the heat exchange medium to enter the heat exchange flow channel through the connection channel, thereby implementing heat exchange with the battery cell assembly. In addition, the heat exchange assembly is configured to comprise the flexible members, and the flexible members are lightweight, which helps reduce the mass of the battery apparatus, reducing production costs of the heat exchange assembly, and helping improve energy density of the battery apparatus. Furthermore, the flexible member is of a flexible structure, which allows the heat exchange assembly to better fit with the case assembly and/or the battery cell assembly, thereby helping absorb an assembly tolerance of the heat exchange assembly without using a gap filler or a thermally conductive material. This increases a fit degree between the heat exchange assembly and the case assembly and/or the battery cell assembly, and increases an effective heat exchange area between the heat exchange assembly and the case assembly and/or the battery cell assembly, thereby improving heat exchange efficiency and a heat exchange effect of the heat exchange assembly.

A fourth aspect of the embodiments of the present disclosure provides an energy storage device, comprising the foregoing battery apparatus or the foregoing heat exchange assembly.

The battery apparatus of the energy storage device provided in the embodiments of the present disclosure comprises a case assembly, a battery cell assembly, and a heat exchange assembly. The battery cell assembly is arranged in an accommodating cavity of the case assembly, and the case assembly protects the battery cell assembly. The heat exchange assembly is provided with a rigid connector and at least two flexible members, and the rigid connector is connected to the flexible members, so that the connection channel is communicated with the heat exchange flow channel. In other words, the heat exchange assembly can be communicated with the outside through the rigid connector, allowing the heat exchange medium to enter the heat exchange flow channel through the connection channel, thereby implementing heat exchange with the battery cell assembly. In addition, the heat exchange assembly is configured to comprise the flexible members, and the flexible members are lightweight, which helps reduce the mass of the battery apparatus, reducing production costs of the heat exchange assembly, and helping improve energy density of the battery apparatus. Furthermore, the flexible member is of a flexible structure, which allows the heat exchange assembly to better fit with the case assembly and/or the battery cell assembly, thereby helping absorb an assembly tolerance of the heat exchange assembly without using a gap filler or a thermally conductive material. This increases a fit degree between the heat exchange assembly and the case assembly and/or the battery cell assembly, and increases an effective heat exchange area between the heat exchange assembly and the case assembly and/or the battery cell assembly, thereby improving heat exchange efficiency and a heat exchange effect of the heat exchange assembly.

### BRIEF DESCRIPTION OF THE DRAWINGS

FIG. 1 is a schematic diagram of a structure of a vehicle according to an embodiment of the present disclosure;
FIG. 2 is a schematic exploded perspective view of a battery apparatus according to an embodiment of the present disclosure;
FIG. 3 is a schematic diagram of a structure of a heat exchange assembly according to an embodiment of the present disclosure;
FIG. 4 is an exploded view of FIG. 3;
FIG. 5 is a top view of a heat exchange assembly according to an embodiment of the present disclosure;
FIG. 6 is a cross-sectional view taken along a direction A-A in FIG. 5;
FIG. 7 is a cross-sectional view of a heat exchange assembly according to another embodiment of the present disclosure, with a cross-sectional direction being the same as that in FIG. 6; and
FIG. 8 is an exploded view of a rigid connector according to an embodiment of the present disclosure.

### Description of numeral numbers

10. battery cell assembly; 11. battery cell; 20. case assembly; 21. case body; 211. first case portion; 212. second case portion; 22. accommodating cavity; 30. heat exchange assembly; 31. flexible member; 311. heat exchange flow channel; 312. connection port; 32. rigid connector; 321. connection channel; 322. connection main body; 3221. flange; 3222. first connection segment; 3223. second connection segment; 323. connection ring; 3231. step; 100. battery apparatus; 200. controller; 300. motor; and 1000. vehicle.

### DETAILED DESCRIPTION OF PREFERRED EMBODIMENTS

Unless otherwise specified, all implementations and optional implementations of the present disclosure may be combined with each other to form new technical solutions.

Unless otherwise specified, all technical features and optional technical features of the present disclosure can be combined with each other to form new technical solutions.

With the development of clean energy, more and more devices use electric energy as driving energy, and thus power batteries capable of storing a large amount of electric energy and undergoing multiple charge-discharge cycles are rapidly developing, such as lithium-ion batteries. Power batteries are not only applied in energy storage power systems such as hydroelectric, thermal, wind, and solar power plants, but also widely applied in electric vehicles such as electric bicycles, electric motorcycles, and electric cars, as well as aerospace, and many other fields.

In the embodiments of the present disclosure, a battery cell may be a secondary battery, which refers to a battery cell that may be continuously used by activating an active material by means of charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, which is not limited in the embodiments of the present disclosure.

The battery cell generally includes an electrode assembly. The electrode assembly includes a positive electrode, a negative electrode, and a separator arranged between the positive electrode and the negative electrode. During charging and discharging of the battery cell, intercalation/de-intercalation of active ions (e.g., lithium ions) are enabled at the positive electrode and negative electrode by moving the active ions between the positive electrode and negative electrode. The separator is disposed between the positive electrode and the negative electrode to prevent the positive and negative electrodes from being short-circuited and to allow active ions to pass therethrough.

The electrode assembly may be of a wound structure, a laminated structure, or a combination of a wound structure and a laminated structure.

In some implementations, the electrode assembly is a wound structure. The positive plate and the negative plate are wound in a wound structure.

In some implementations, the electrode assembly is a laminated structure.

As an example, a plurality of positive plates and a plurality of negative plates may be respectively provided, and are alternately stacked.

As an example, a plurality of positive plates may be provided, the negative plate may be folded to form a plurality of stacked folding segments, and one positive plate is sandwiched between adjacent folding segments.

As an example, the positive plate and negative plate are both folded to form a plurality of stacked folding segments.

As an example, a plurality of separators may be provided, between any adjacent positive plates or negative plates respectively.

As an example, the separator may be continuously provided between any adjacent positive plates or negative plates by folding or winding.

In some implementations, the electrode assembly may have a cylindrical shape, a flat shape, a polygonal column shape, or the like.

In some implementations, the electrode assembly is provided with a tab that may conduct current from the electrode assembly. The tab includes a positive tab and a negative tab.

In some implementations, the battery cell may include a housing. The housing may be a steel housing, an aluminum housing, a plastic housing (e.g., polypropylene), a composite metal housing (e.g., a copper-aluminum composite housing), an aluminum plastic film, or the like. In some embodiments, the housing may be of a sealed structure, or may be of a non-sealed structure. As an example, when the housing is of a non-sealed structure, the housing plays a role of protecting the electrode assembly. A sealing bag is further included between the housing and the electrode assembly, and the sealing bag is used to encapsulate the electrode assembly and the electrolyte. Specifically, the sealing bag may be a bag-shaped insulating member or an aluminum plastic film. When the housing is of a sealed structure, the housing is configured to encapsulate components such as the electrode assembly and the electrolyte.

As an example, the battery cell may be a cylindrical battery cell, a prismatic battery cell, a pouch battery cell, or another shaped battery cell. The prismatic battery cell includes a square-housing battery cell, a blade-shaped battery cell, and a polygon prism battery cell, for example, a hexagonal prism battery cell and the like. This is not particularly limited in the present disclosure.

In some implementations, the housing includes an end cap and a casing. The casing is provided with an opening, and the end cap covers the opening. The casing may be provided with one or more openings. One or more end caps may also be provided.

In some implementations, the housing is provided with at least one electrode terminal thereon, and the at least one electrode terminal is electrically connected to a tab. The electrode terminal may be directly connected to the tab, or may be indirectly connected to the tab through a current collecting member. The electrode terminal may be disposed on the end cap, or may be disposed on the casing.

In some embodiments, an energy storage device includes an energy storage container, an energy storage cabinet, and the like.

During use of a battery apparatus, battery cells in the battery apparatus generate heat. Excessive heat adversely affects performance and service life of the battery apparatus. Therefore, how to effectively dissipate heat of the battery cells of the battery apparatus has become an important research direction in the field. In related technologies, the battery cells in the battery apparatus are cooled by providing a cooling system in a battery apparatus box. The cooling system may include a plurality of aluminum water-cooling plates laid in the battery apparatus box, and surfaces of the plurality of water-cooling plates are in contact with surfaces of the battery cells in the battery apparatus. During use, a heat exchange medium such as water flows through the plurality of water-cooling plates, thereby taking away heat from the battery cells to lower the temperature for the battery cells. However, when the aluminum water-cooling plates in the foregoing cooling system cannot well fit with the surfaces of the battery cells in the battery apparatus, heat exchange efficiency and a heat exchange effect are not good. In addition, during assembly with a battery cell assembly, it is necessary to perform assembly tolerance compensation and apply a gap filler, resulting in high production costs. Furthermore, the water-cooling plates and the battery apparatus box have high rigidity, requiring use of hard structural adhesive, making disassembly difficult. If pressure-sensitive adhesive, soft adhesive, or a double-sided tape is used, because rigidity of the water-cooling plate and the battery apparatus box is good, there is a problem of adhesive failure when there is a gap or flatness mismatch.

In view of this, to improve the heat exchange efficiency and the heat exchange effect of the heat exchange assembly, embodiments of the present disclosure provide a battery apparatus, and the battery apparatus includes a case assembly, a battery cell assembly, and a heat exchange assembly. The battery cell assembly is arranged in the case assembly. The heat exchange assembly is configured to exchange heat with the battery cell assembly. The heat exchange assembly includes a rigid connector and at least two flexible members, the at least two flexible members are stacked, a heat exchange flow channel is formed between the flexible members, and the heat exchange flow channel is configured to conduct a heat exchange medium. The rigid connector is provided with a connection channel, the rigid connector is connected to the flexible members, and the connection channel is communicated with the heat exchange flow channel.

The battery apparatus provided in the embodiments of the present disclosure includes a case assembly, a battery cell assembly, and a heat exchange assembly. The battery cell assembly is arranged in an accommodating cavity of the case assembly, and the case assembly protects the battery cell assembly. The heat exchange assembly is provided with a rigid connector and at least two flexible members, and the rigid connector is connected to the flexible members, so that the connection channel is communicated with the heat exchange flow channel. In other words, the heat exchange assembly can be communicated with the outside through the rigid connector, allowing the heat exchange medium to enter the heat exchange flow channel through the connection channel, thereby implementing heat exchange with the battery cell assembly. In addition, the heat exchange assembly is configured to include the flexible members, and the flexible members are lightweight, which helps reduce the mass of the battery apparatus, reducing production costs of the heat exchange assembly, and helping improve energy density of the battery apparatus. Furthermore, the flexible member is of a flexible structure, and the flexible structure has certain deformation capability, which allows the heat exchange assembly to better fit with and adapt to the case assembly and/or the battery cell assembly, thereby helping absorb an assembly tolerance of the heat exchange assembly. This increases a fit degree between the heat exchange assembly and the case assembly and/or the battery cell assembly, and increases an effective heat exchange area between the heat exchange assembly and the case assembly and/or the battery cell assembly, thereby improving heat exchange efficiency and a heat exchange effect of the heat exchange assembly.

The technical solutions described in the embodiments of the present disclosure are all applicable to various electric devices using the battery apparatus. The electric device includes the battery apparatus according to any embodiment of the present disclosure, and the battery apparatus is configured to provide electric energy.

The electric device may be a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like. In the embodiments of the present disclosure, the foregoing electric device is not particularly limited.

It should be noted that the technical solutions described in the embodiments of the present disclosure are not limited to only applicable to the foregoing battery apparatus, and are also applicable to all battery apparatuses including a case assembly and all electric devices using the battery apparatuses. However, for brevity of description, the following embodiments are described by using an electric vehicle as an example.

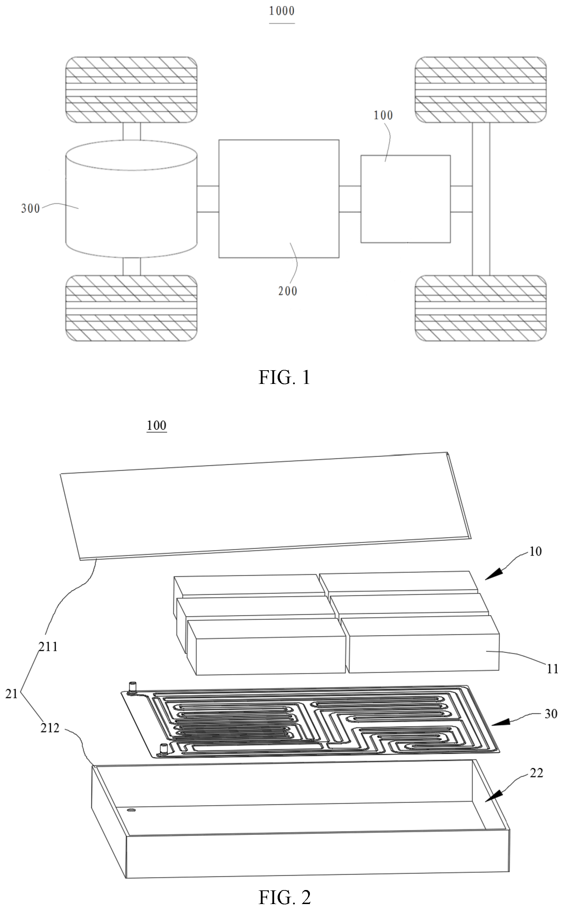

With reference to FIG. 1, a controller 200, a motor 300, and a battery apparatus 100 may be provided inside a vehicle 1000. The controller 200 is configured to control the battery apparatus 100 to supply power to the motor 300. For example, the battery apparatus 100 may be arranged at a bottom, head, or tail of the vehicle 1000. The battery apparatus 100 may be configured to supply power to the vehicle 1000. For example, the battery apparatus 100 may be used as an operating power source of the vehicle 1000, for a circuit system of the vehicle 1000, such as for operating power requirements for starting, navigation, and running of the vehicle 1000. In another embodiment of the present disclosure, the battery apparatus 100 may be used not only as the operating power source of the vehicle 1000, but also as a driving power source of the vehicle 1000, replacing or partially replacing fuel or natural gas to provide driving power to the vehicle 1000.

With reference to FIG. 2, to meet different power usage requirements, the battery apparatus 100 includes a battery cell assembly 10, and the battery cell assembly 10 may include a plurality of battery cells 11. The battery cell 11 refers to the smallest unit that constitutes a module or pack of the battery apparatus 100. The plurality of battery cells 11 may be connected in series, in parallel, or in a combination of both, and "in a combination of both" means that the plurality of battery cells 11 are connected both in series and in parallel. The plurality of battery cells 11 may be directly connected in series, in parallel, or in a combination of both, and then the whole composed of the plurality of battery cells 11 is accommodated in the case assembly 20. Certainly, the battery apparatus 100 may alternatively be configured such that the plurality of battery cells 11 are first connected in series, in parallel, or in a combination of both to form a module of the battery apparatus 100, and then a plurality of modules of the battery assembly 100 are then connected in series, in parallel, or in a combination of both to form an integral unit, which is accommodated in the case assembly 20. The battery apparatus 100 may further include other structures. For example, the battery apparatus 100 may further include a busbar component for implementing an electrical connection between the plurality of battery cells 11. Here, each battery cell 11 may be a secondary battery apparatus 100 or a primary battery apparatus 100, or may be a lithium-sulfur battery apparatus 100, a sodium-ion battery apparatus 100, or a magnesium-ion battery apparatus 100, but is not limited thereto. The battery cell 11 may be in a shape of a cylinder, a flat body, a cuboid, or in other shapes.

The embodiments of the present disclosure provide a battery apparatus 100, and the battery apparatus 100 includes a case assembly 20, a battery cell assembly 10, and a heat exchange assembly 30. The battery cell assembly 10 is arranged in the case assembly 20. The heat exchange assembly 30 is configured to exchange heat with the battery cell assembly 10. The heat exchange assembly 30 includes a rigid connector 32 and at least two flexible members 31, the at least two flexible members 31 are stacked, a heat exchange flow channel 311 is formed between the flexible members 31, and the heat exchange flow channel 311 is configured to conduct a heat exchange medium. The rigid connector 32 is provided with a connection channel 321, the rigid connector 32 is connected to the flexible members 31, and the connection channel 321 is communicated with the heat exchange flow channel 311.

With reference to FIG. 2, the battery apparatus 100 includes a case assembly 20 and a battery cell assembly 10, the battery cell assembly 10 includes at least one battery cell 11, and the battery cell 11 is arranged in an accommodating cavity 22 of the case assembly 20.

The case assembly 20 may be a simple three-dimensional structure such as a single cuboid, cylinder, or sphere, or may be a complex three-dimensional structure composed of simple three-dimensional structures such as cuboids, cylinders, or spheres. The material of the case assembly 20 may be an alloy material such as an aluminum alloy or an iron alloy, or may be a polymer material such as polycarbonate or polyisocyanurate foam plastic, or may be a composite material such as glass fiber reinforced with epoxy resin.

The case assembly 20 is configured to encapsulate the battery cell assembly 10, and the case assembly 20 can prevent liquids or other foreign objects from affecting charging or discharging of the battery cell assembly 10.

For example, the case assembly 20 is generally of a cuboid structure, both the length direction and the width direction of the case assembly 20 are parallel to the horizontal plane, and the length direction of the case assembly 20 is parallel to the longest side of the cuboid structure of the case assembly 20. The height direction of the case assembly 20 is perpendicular to the ground.

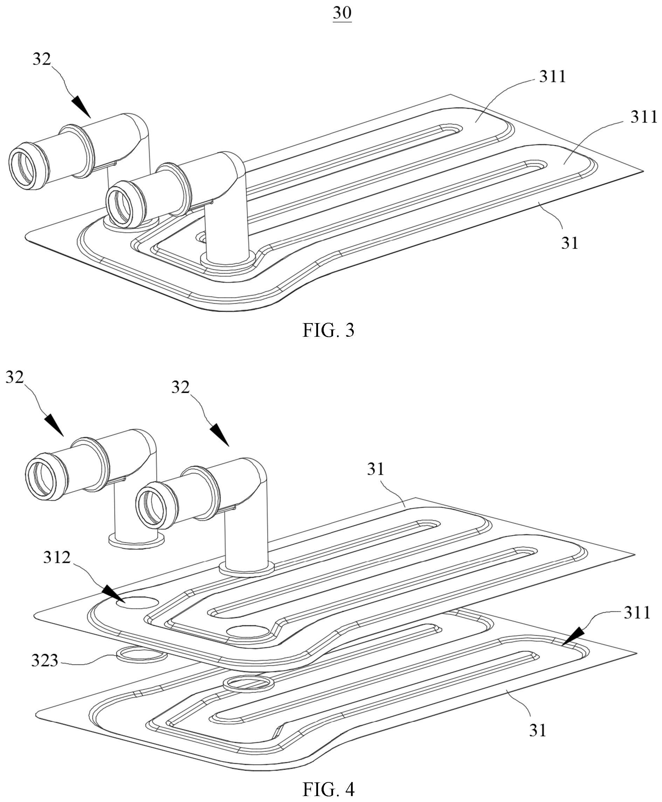

With reference to FIG. 3 to FIG. 7, the embodiments of the present disclosure provide a heat exchange assembly 30, the heat exchange assembly 30 is the heat exchange assembly 30 of the battery apparatus 100 provided in the embodiments of the present disclosure, and the heat exchange assembly 30 is configured to exchange heat with the battery cell assembly 10.

Here, the heat exchange assembly 30 is arranged in the accommodating cavity 22 of the case assembly 20, that is, can be in direct contact with the battery cell assembly 10, which helps improve heat exchange efficiency and a heat exchange effect.

That the heat exchange assembly 30 includes at least two flexible members 31 means that a quantity of flexible members 31 included in the heat exchange assembly 30 may be two or more than two.

Here, flexibility of the flexible member 31 refers to a material characteristic of the structure, and this type of characteristic may be a nature imparted to the material because the material is lightweight, or may be a nature imparted to the material due to at least any one nature of the thickness, rigidity, strength, elastic modulus, and the like of the material. As an example, the material of the flexible member 31 may be selected to be a material with a smaller mass than materials used for conventional structures such as aluminum plates or steel plates, and the flexibility of the flexible member 31 can be controlled through the thickness, width, length and material type of the flexible member 31. In the embodiments of the present disclosure, the heat exchange assembly 30 is configured as a form of the flexible member 31, which helps reduce the weight of the heat exchange assembly 30.

The at least two flexible members 31 include a heat-sealed region, and the heat-sealed region is configured to be formed by the at least two flexible members 31 through hot pressing. The heat-sealed region separates the heat exchange assembly 30 into a heat exchange flow channel 311 and a non-heat-sealed region, which means that the flexible members 31 are hot-pressed to form the heat exchange flow channel 311 and the non-heat-sealed region, that is, the heat-sealed region separates the heat exchange flow channel 311 and the non-heat-sealed region.

The heat exchange medium flows through the heat exchange flow channel 311 to exchange heat with the battery cell assembly 10.

It should be noted that a specific type of the heat exchange medium is not limited herein, provided that the heat exchange medium can have a cooling effect on the battery cell 11, for example, the heat exchange medium may be gaseous or liquid. The embodiments of the present disclosure are described by taking a cooling liquid as the heat exchange medium as an example.

For example, the heat exchange assembly 30 further includes a rigid connector 32, and the rigid connector 32 is provided with a connection channel 321 for communicating with the outside. For example, the rigid connector 32 may be configured to be connected to a pipeline of a liquid storage apparatus, such as an air conditioning system or a water tank of an entire vehicle or an electric device.

The rigid connector 32 may be a liquid inlet connector or a liquid outlet connector, or may include a liquid inlet connector and a liquid outlet connector.

Here, the rigid connector 32 may be a metal part, a plastic part, or the like, and a specific material is not limited herein.

It should be noted that a specific quantity of heat exchange flow channels 311 is not limited herein. One or more heat exchange flow channels may be provided.

"A plurality of" in the embodiments of the present disclosure means that the quantity is two or more.

The principle of the heat exchange assembly 30 exchanging heat with the battery cell assembly 10 is as follows: A heat exchange medium output from a heat exchange medium source (not shown in the figure) enters the heat exchange flow channel 311 through the connection channel 321 of the rigid connector 32, and after the heat exchange medium exchanges heat with the battery cell assembly 10, the heat exchange medium flows out through the connection channel 321 of the rigid connector 32, thereby completing heat exchange for the battery cell assembly 10.

Here, that the heat exchange assembly 30 exchanges heat with the battery cell assembly 10 may be that the heat exchange assembly dissipates heat from the battery cell assembly 10, or may be that the heat exchange assembly heats the battery cell assembly 10.

The principle of the heat exchange assembly 30 dissipating heat from the battery cell assembly 10 is as follows: The heat exchange medium output from the heat exchange medium source enters the heat exchange flow channel 311 through the connection channel 321 of the rigid connector 32, and after the heat exchange medium absorbs heat generated during working of the battery cell assembly 10, the heat exchange medium flows out through the connection channel 321 of the rigid connector 32 and releases the heat, thereby completing cooling and heat dissipation of the battery cell assembly 10.

The principle of the heat exchange assembly 30 heating the battery cell assembly 10 is as follows: The heat exchange medium output from the heat exchange medium source enters the heat exchange flow channel 311 through the connection channel 321 of the rigid connector 32, and the heat exchange medium transfers heat to the battery cell assembly 10, so that after the battery cell assembly 10 is heated, the heat exchange medium flows out through the connection channel 321 of the rigid connector 32, thereby completing heating for the battery cell assembly 10.

The flexible member 31 is configured as a flexible structure, and the flexible member 31 has a certain expandable or contractible characteristic, which can also be understood as that the flexible member 31 may be an elastically deformable structure, and the flexible member 31 has capability to deform and recover an original shape, so that the heat exchange assembly 30 can be formed as a profiling structure. This allows the heat exchange assembly 30 to better adapt to the external contour shape of the battery cells or other components, to increase a fit degree between the heat exchange assembly 30 and the case assembly 20 and/or the battery cell assembly 10, thereby increasing an effective heat exchange area between the heat exchange assembly 30 and the case assembly 20 and/or the battery cell assembly 10, and further improving heat exchange efficiency.

It should be noted that the flexible member 31 may have electrical conductivity, which facilitates equipotential configuration. The flexible member 31 may also have an electrical insulation characteristic, eliminating the need for insulation treatment, which helps reduce a risk of electric leakage and production costs of the battery apparatus 100, thereby improving reliability of the battery apparatus 100.

The battery apparatus provided in the embodiments of the present disclosure includes a case assembly 20, a battery cell assembly 10, and a heat exchange assembly 30. The battery cell assembly 10 is arranged in an accommodating cavity 22 of the case assembly 20, and the case assembly 20 protects the battery cell assembly 10. The heat exchange assembly 30 is provided with a rigid connector 32 and at least two flexible members 31, and the rigid connector 32 is connected to the flexible members 31, so that the connection channel 321 is communicated with the heat exchange flow channel 311. In other words, the heat exchange assembly 30 can be communicated with the outside through the rigid connector 32, allowing the heat exchange medium to enter the heat exchange flow channel 311 through the connection channel 321, thereby implementing heat exchange with the battery cell assembly 10. In addition, the heat exchange assembly 30 is configured to include the flexible members 31, and the flexible members 31 are lightweight, which helps reduce the mass of the battery apparatus 100, reducing production costs of the heat exchange assembly 30, and helping improve energy density of the battery apparatus 100. Furthermore, the flexible member 31 is of a flexible structure, and the flexible structure has certain deformation capability, which allows the heat exchange assembly 30 to better fit with and adapt to the case assembly 20 and/or the battery cell assembly 10, thereby helping absorb an assembly tolerance of the heat exchange assembly 30. This increases a fit degree between the heat exchange assembly 30 and the case assembly 20 and/or the battery cell assembly 10, and increases an effective heat exchange area between the heat exchange assembly 30 and the case assembly 20 and/or the battery cell assembly 10, thereby improving heat exchange efficiency and a heat exchange effect of the heat exchange assembly 30.

The case assembly 20 is configured to accommodate the battery cell assembly 10, and the case assembly 20 may have various structures. In some embodiments, with reference to FIG. 2, the case assembly 20 includes a case body 21, and the case body 21 may include a first case portion 211 and a second case portion 212. The first case portion 211 and the second case portion 212 cover each other, and the first case portion 211 and the second case portion 212 jointly define the accommodating cavity 22 for accommodating the battery cell assembly 10. The second case portion 212 may be a hollow structure with an opening at an end. The first case portion 211 is a plate-shaped structure. The first case portion 211 covers an opening side of the second case portion 212 to form the case body 21 having the accommodating cavity 22. The first case portion 211 and the second case portion 212 may each be a hollow structure with an opening at an side. The opening side of the first case portion 211 covers the opening side of the second case portion 212 to form the case body 21 having the accommodating cavity 22. Certainly, the first case portion 211 and the second case portion 212 may be in various shapes such as a cylinder or a cuboid.

To improve sealing performance after the first case portion 211 and the second case portion 212 are connected, a sealing member such as a sealant or a sealing ring may be provided between the first case portion 211 and the second case portion 212.

Assuming that the first case portion 211 covers the top of the second case portion 212, the first case portion 211 may also be referred to as an upper case cover, and the second case portion 212 may also be referred to as a lower case cover.

For example, the case assembly 20 includes a bottom guard plate, and the bottom guard plate may be arranged at the bottom of the case body 21. By providing the bottom guard plate, the heat exchange assembly 30 can be supported and protected.

It should be noted that a specific manner of connecting the rigid connector 32 to the flexible member 31 is not limited herein.

In some embodiments, with reference to FIG. 2 to FIG. 7, the flexible member 31 is formed with a connection port 312 communicated with the heat exchange flow channel 311, and the rigid connector 32 is hot-press connected to the inner wall of the flexible member 31 located at the edge of the connection port 312.

The flexible member 31 is formed with the connection port 312 communicated with the heat exchange flow channel 311, so that the rigid connector 32 can be connected to the flexible member 31 through the connection port 312, and the connection channel 321 is communicated with the heat exchange flow channel 311.

Specifically, a portion of the rigid connector 32 can extend between the at least two flexible members 31, that is, extend into the heat exchange flow channel 311, and is hot-press connected to the inner wall of the flexible member 31 located at the edge of the connection port 312. In other words, a portion of the rigid connector 32 extends into the heat exchange flow channel 311, and is hot-press connected to the side wall of the heat exchange flow channel 311.

It may be understood that the rigid connector 32 is hot-press connected to the inner wall of the flexible member 31 located at the edge of the connection port 312, and on a projection plane parallel to a plane on which the connection port 312 is located, a projection of the connection port 312 falls within a projection range of a region in which the rigid connector 32 is connected to the flexible member 31.

In the embodiments, the rigid connector 32 is hot-press connected to the inner wall of the flexible member 31 located at the edge of the connection port 312, to implement a sealed connection between the rigid connector 32 and the flexible member 31. This connection structure is simple and reliable. In addition, the rigid connector 32 can be hot-press connected to the inner wall of the flexible member 31 located at the edge of the connection port 312 while the flexible member 31 forms the heat exchange flow channel 311 through hot pressing, thereby reducing assembly steps and improving assembly efficiency.

Certainly, in some other implementations, the rigid connector 32 is alternatively adhesively connected to the inner side wall of the flexible member 31 located at the edge of the connection port 312.

In some embodiments, with reference to FIG. 2 to FIG. 7, the flexible member 31 is formed with a connection port 312 communicated with the heat exchange flow channel 311. The rigid connector 32 includes a connection main body 322 and a connection ring 323, and at least a portion of the connection ring 323 is arranged in the heat exchange flow channel 311. The connection ring 323 is connected to the inner wall of the flexible member 31 located at the edge of the connection port 312.

Here, the connection ring 323 is connected to the inner wall of the flexible member 31 located at the edge of the connection port 312. Therefore, on the projection plane parallel to the plane on which the connection port 312 is located, the projection of the connection port 312 is located within a projection range of the connection ring 323. This facilitates connection between the connection ring 323 and the inner wall of the flexible member 31 located at the edge of the connection port 312.

Here, the connection main body 322 may be directly or indirectly connected to the connection ring 323. For example, the connection main body 322 is connected to the outer wall of the flexible member 31 located at the edge of the connection port 312, and the connection ring 323 is connected to the inner wall of the flexible member 31 located at the edge of the connection port 312, thereby implementing connection between the connection main body 322 and the connection ring 323.

The rigid connector 32 includes a connection main body 322 and a connection ring 323, and the connection main body 322 and the connection ring 323 jointly form a connection channel 321.

The connection ring 323 has an annular shape, and an internal space of the connection ring 323 constitutes a portion of the connection channel 321.

In related technologies, the rigid connector needs to be pulled out from the inside of the flexible member before heat pressing can begin, and a connection region between the rigid connector and the flexible member needs to be larger than the pipe diameter of the connection main body. This type of connection manner is only applicable to a straight pipe, and is not applicable to a complex rigid connector with a bent segment.

In the embodiments, the rigid connector 32 is configured to include the connection main body 322 and the connection ring 323, and the connection main body 322 and the connection ring 323 jointly form the connection channel 321. In this way, the connection main body 322 can be connected to the connection ring from the outer side of the flexible member 31 without extending from the inner side of the flexible member 31, which facilitates connection of the rigid connector 32 to the flexible member 31 through the connection ring 323 and connection of the rigid connector 32 to the connection ring 323 through the connection main body 322, thereby implementing connection between the rigid connector 32 and the flexible member 31. This improves assembly efficiency of the connection between the rigid connector 32 and the flexible member 31, and is applicable to a rigid connector 32 with a complex structure.

It should be noted that a specific connection manner between the connection ring 323 and the flexible member 31 is not limited herein.

In some embodiments, with reference to FIG. 3 to FIG. 7, the connection ring 323 is hot-press connected to the inner wall of the flexible member 31 located at the edge of the connection port 312.

The flexible member 31 is formed with the connection port 312 communicated with the heat exchange flow channel 311. In this way, at least a partial structure of the connection ring 323 can be arranged in the flexible member 31 and connected to the flexible member 31, so that the connection channel 321 is communicated with the heat exchange flow channel 311.

Specifically, at least a portion of the connection ring 323 can extend between the at least two flexible members 31, that is, extend into the heat exchange flow channel 311, and is hot-press connected to the inner wall of the flexible member 31 located at the edge of the connection port 312. In other words, at least a portion of the connection ring 323 extends into the heat exchange flow channel 311, and is hot-press connected to the side wall of the heat exchange flow channel 311.

It may be understood that the connection ring 323 is hot-press connected to the inner wall of the flexible member 31 located at the edge of the connection port 312, and on a projection plane parallel to a plane on which the connection port 312 is located, a projection of the connection port 312 falls within a projection range of a region in which the connection ring 323 is connected to the flexible member 31.

In the embodiments, the connection ring 323 is hot-press connected to the inner wall of the flexible member 31 located at the edge of the connection port 312, to implement a sealed connection between the connection ring 323 and the flexible member 31. This connection structure is simple and reliable. In addition, the connection ring 323 can be hot-press connected to the inner wall of the flexible member 31 located at the edge of the connection port 312 while the flexible member 31 forms the heat exchange flow channel 311 through hot pressing, thereby reducing assembly steps and improving assembly efficiency.

Certainly, in some other implementations, the connection ring 323 is alternatively adhesively connected to the inner wall of the flexible member 31 located at the edge of the connection port 312.

In some embodiments, with continued reference to FIG. 3 to FIG. 7, an end of the connection main body 322 extends into the connection ring 323 and is connected to the connection ring 323.

An end of the connection main body 322 extends into the connection ring 323, that is, a main body portion of the connection main body 322 is located outside the flexible member 31 for communicating with the outside.

Here, an end of the connection main body 322 extends into the connection ring 323, which helps implement connection between the outer side wall of the connection main body 322 and the inner side wall of the connection ring 323.

It should be noted that a bottom end surface of the connection main body 322 may be flush with a bottom end surface of the connection ring 323, or may be lower than a bottom end surface of the connection ring 323. In this way, impact of the connection main body 322 on the heat exchange flow channel 311 can be reduced as much as possible.

In the embodiments, an end of the connection main body 322 extends into the connection ring 323 and is connected to the connection ring 323. This connection manner is simple and reliable.

It should be noted that a specific connection manner between the connection main body 322 and the connection ring 323 is not limited herein.

For example, the connection main body 322 and the connection ring 323 may be connected through welding, or through adhesive, or through a combination of both welding and adhesive.

Of course, in some other implementations, the connection main body 322 may alternatively not extend into the connection ring 323, but abuts against an end surface of the connection ring 323, so that an end surface of the connection main body 322 and the end surface of the connection ring 323 are connected through welding and/or adhesive.

In some embodiments, with reference to FIG. 3 to FIG. 7, a flange 3221 is formed on a circumferential side wall of the connection main body 322, and the flexible members 31 are sandwiched between the flange 3221 and the connection ring 323.

The flexible members 31 are sandwiched between the flange 3221 and the connection ring 323, that is, the flange 3221 is located on the outer side of the flexible member 31.

In the embodiments, the flange 3221 is formed on the circumferential side wall of the connection main body 322, and the flexible members 31 are sandwiched between the flange 3221 and the connection ring 323. In this way, the flange 3221 can cooperate with the connection ring 323 to sandwich the flexible members 31 therebetween, thereby further improving connection reliability between the rigid connector 32 and the flexible member 31. In addition, in a process of connecting the connection main body 322 and the connection ring 323, the flange 3221 can play a positioning role, thereby improving assembly efficiency.

In some embodiments, with reference to FIG. 3 to FIG. 7, the flange 3221 is connected to the flexible member 31.

That the flange 3221 is connected to the flexible member 31 means that the lower surface of the flange 3221 is connected to the outer surface of the flexible member 31.

In the embodiments, the flange 3221 is connected to the flexible member 31, so that sealing performance between the rigid connector 32 and the flexible member 31 can be improved while connection reliability between the rigid connector 32 and the flexible member 31 is improved.

It should be noted that a specific manner of connecting the flange 3221 to the flexible member 31 is not limited herein.

In some embodiments, the flange 3221 is hot-press connected and/or adhesively connected to the flexible member 31.

Here, the flange 3221 and the flexible member 31 may be connected through hot pressing, may be connected through adhesive, or may be connected through a combination of both heat pressing and adhesive.

In the embodiments, the flange 3221 is hot-press connected to the outer wall of the flexible member 31 located at the edge of the connection port 312, facilitating a sealed connection between the flange 3221 and the flexible member 31. This connection structure is simple and reliable. In addition, the flange 3221 is hot-press connected to the outer wall of the flexible member 31 located at the edge of the connection port 312 while the flexible member 31 can be formed with the heat exchange flow channel 311 through hot pressing, thereby reducing assembly steps and improving assembly efficiency.

In the embodiments, the flange 3221 is adhesively connected to the outer wall of the flexible member 31 located at the edge of the connection port 312, facilitating a sealed connection between the flange 3221 and the flexible member 31. This connection structure is simple and reliable.

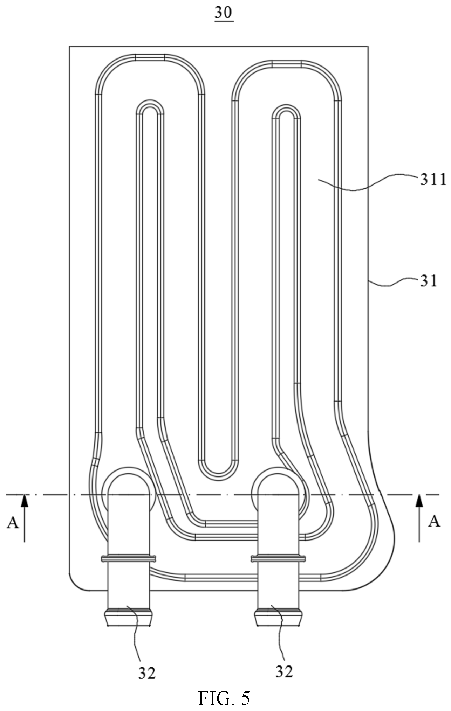

In some embodiments, with reference to FIG. 5 to FIG. 7, the difference obtained by subtracting the outer diameter of the connection ring 323 from the outer diameter of the flange 3221 is 0.2 mm to 30 mm.

The difference obtained by subtracting the outer diameter of the connection ring 323 from the outer diameter of the flange 3221 may be a specific value of any one of or a specific value between any two of 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, 10 mm, 11 mm, 12 mm, 13 mm, 15 mm, 18 mm, 20 mm, 22 mm, 23 mm, 25 mm, 28 mm and 30 mm.

The difference obtained by subtracting the outer diameter of the connection ring 323 from the outer diameter of the flange 3221 is 0.2 mm to 30 mm. In other words, the dimension of the flange 3221 is greater than the dimension of the connection ring 323 in the radial direction of the connection ring 323.

In the embodiments, the difference obtained by subtracting the outer diameter of the connection ring 323 from the outer diameter of the flange 3221 is set to 0.2 mm to 30 mm, which facilitates connection between the flange 3221 and the flexible member 31, and can reduce space occupied by the rigid connector 32 as much as possible. In other words, connection reliability between the rigid connector 32 and the flexible member 31 and a decrease in occupied space can be balanced.

In some embodiments, with reference to FIG. 5 to FIG. 7, the difference obtained by subtracting the outer diameter of the connection ring 323 from the outer diameter of the flange 3221 is 2 mm to 5 mm.

The difference obtained by subtracting the outer diameter of the connection ring 323 from the outer diameter of the flange 3221 may be a specific value of any one of or a specific value between any two of 2 mm, 2.1 mm, 2.2 mm, 2.3 mm, 2.4 mm, 2.5 mm, 2.6 mm, 2.7 mm, 2.8 mm, 2.9 mm, 3 mm, 3.2 mm, 3.5 mm, 3.6 mm, 3.8 mm, 3.9 mm, 4 mm, 4.1 mm, 4.2 mm, 4.5 mm, 4.6 mm, 4.7 mm, 4.8 mm, 4.9 mm, and 5 mm.

In the embodiments, connection reliability between the rigid connector 32 and the flexible member 31 and a decrease in occupied space can be further balanced.

In some embodiments, with continued reference to FIG. 5 to FIG. 7, in the radial direction of the connection ring 323, the dimension of a connection region between the connection ring 323 and the flexible member 31 is greater than or equal to 0.2 mm.

The dimension of the connection region between the connection ring 323 and the flexible member 31 may be a specific value of any one of or a specific value between any two of 0.2 mm, 0.3 mm, 0.4 mm, 0.5 mm, 0.6 mm, 0.7 mm, 0.8 mm, 0.9 mm, 1 mm, 5 mm, 10 mm, 15 mm, 18 mm, 20 mm, 25 mm, 28 mm, 30 mm, 100 mm, 300 mm, 800 mm, and 1000 mm, or a specific value greater than 1000 mm.

Here, the connection region between the connection ring 323 and the flexible member 31 is the end surface of the connection ring 323, and the dimension of the connection region between the connection ring 323 and the flexible member 31 may be the dimension obtained by subtracting the inner diameter of the connection ring 323 from the outer diameter of the connection ring 323. Therefore, in the radial direction of the connection ring 323, the dimension of the connection region between the connection ring 323 and the flexible member 31 is greater than or equal to 0.2 mm, that is, the dimension obtained by subtracting the inner diameter of the connection ring 323 from the outer diameter of the connection ring 323 is greater than or equal to 0.2 mm.

In the embodiments, in the radial direction of the connection ring 323, the dimension of the connection region between the connection ring 323 and the flexible member 31 is set to be greater than or equal to 0.2 mm, which helps improve connection reliability between the connection ring 323 and the flexible member 31.

In some embodiments, with continued reference to FIG. 5 to FIG. 7, in the radial direction of the connection ring 323, the dimension of a connection region between the connection ring 323 and the flexible member 31 is 1 mm to 30 mm.

The dimension of the connection region between the connection ring 323 and the flexible member 31 may be a specific value of any one of or a specific value between any two of 1 mm, 2 mm, 3 mm, 4 mm, 5 mm, 6 mm, 7 mm, 8 mm, 9 mm, 10 mm, 11 mm, 12 mm, 13 mm, 15 mm, 18 mm, 20 mm, 22 mm, 23 mm, 25 mm, 28 mm, and 30 mm.

In the embodiments, in the radial direction of the connection ring 323, the dimension of the connection region between the connection ring 323 and the flexible member 31 is set to 1 mm to 30 mm, which helps improve connection reliability between the connection ring 323 and the flexible member 31, and can reduce space occupied by the connection ring 323 in the heat exchange flow channel 311 as much as possible, thereby improving heat exchange efficiency. In other words, connection reliability between the connection ring 323 and the flexible member 31 and a decrease in occupied space can be balanced.

In some embodiments, with continued reference to FIG. 5 to FIG. 7, an end of the connection main body 322 extends into the connection ring 323 and is connected to the inner side wall of the connection ring 323. The dimension of the connection main body 322 extending into the connection ring 323 is greater than or equal to 0.2 mm to 20 mm.

The dimension of the connection main body 322 extending into the connection ring 323 may be a specific value of any one of or a specific value between any two of 0.2 mm, 0.3 mm, 0.4 mm, 0.5 mm, 0.6 mm, 0.7 mm, 0.8 mm, 0.9 mm, 1 mm, 2 mm, 3 mm, 4 mm, 5 mm, 6 mm, 7 mm, 8 mm, 9 mm, 10 mm, 11 mm, 12 mm, 13 mm, 15 mm, 18 mm, and 20 mm.

In the embodiments, the dimension of the connection main body 322 extending into the connection ring 323 is set to 0.2 mm to 20 mm, which facilitates connection between the connection main body 322 and the connection ring 323, and can reduce space occupied by the connection ring 323 in the heat exchange flow channel 311 as much as possible, thereby improving heat exchange efficiency. In other words, connection reliability between the connection main body 322 and the connection ring 323 and a decrease in occupied space can be balanced.

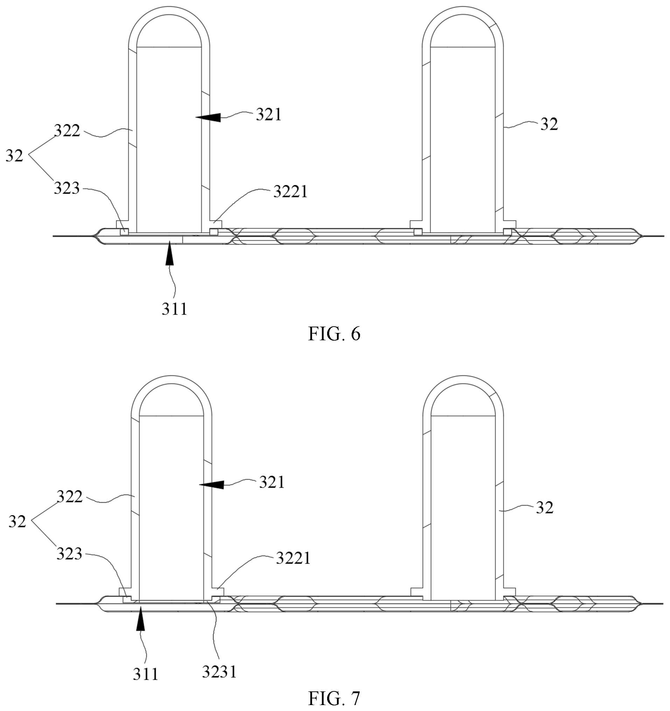

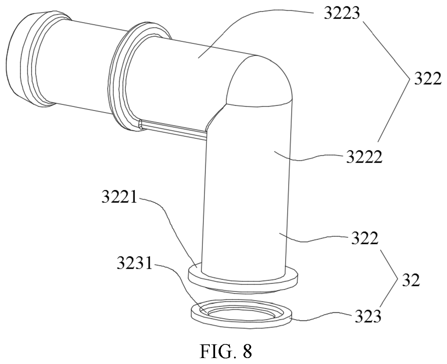

In some embodiments, with reference to FIG. 7 and FIG. 8, a portion of the inner side wall of the connection ring 323 extends inward in the radial direction to form a step 3231, and an end portion of the connection main body 322 abuts against the step 3231.

For example, the inner diameter of the step 3231 is greater than or equal to the inner diameter of the connection main body 322. In this way, the step 3231 does not obstruct flow of the heat exchange medium between the connection channel 321 and the heat exchange channel.

For example, the step 3231 is formed at the bottom of the connection ring 323.

In the embodiments, the step 3231 is formed in the connection ring 323, and the end portion of the connection main body 322 abuts against the step 3231. In this way, the end portion of the connection main body 322 can be connected to the step 3231, thereby further improving connection reliability between the connection main body 322 and the connection ring 323. In addition, in a process of connecting the connection main body 322 and the connection ring 323, the step 3231 can play a positioning role, thereby improving assembly efficiency.

In some embodiments, with reference to FIG. 7 and FIG. 8, in the radial direction of the connection ring 323, the dimension of the step 3231 is 0.2 mm to 10 mm.

In the radial direction of the connection ring 323, the dimension of the step 3231 may be a specific value of any one of or a specific value between any two of 0.2 mm, 0.3 mm, 0.4 mm, 0.5 mm, 1 mm, 2 mm, 3 mm, 4 mm, 5 mm, 6 mm, 7 mm, 8 mm, 9 mm, and 10 mm.

In the embodiments, in the radial direction of the connection ring 323, the dimension of the step 3231 is set to 0.2 mm to 10 mm, which facilitates connection between the connection main body 322 and the connection ring 323 and structural strength of the step 3231, and can reduce space occupied by the step 3231 in the heat exchange flow channel 311 as much as possible, thereby improving heat exchange efficiency. In other words, connection reliability between the connection main body 322 and the connection ring 323 and a decrease in occupied space can be balanced.

In some embodiments, with continued reference to FIG. 7 and FIG. 8, in the radial direction of the connection ring 323, the dimension of the step 3231 is 0.5 mm to 3 mm.

In the radial direction of the connection ring 323, the dimension of the step 3231 may be a specific value of any one of or a specific value between any two of 0.5 mm, 0.6 mm, 0.7 mm, 0.8 mm, 0.9 mm, 1.1 mm, 1.2 mm, 1.3 mm, 1.4 mm, 1.5 mm, 1.6 mm, 1.7 mm, 1.8 mm, 1.9 mm, 2 mm, 2.1 mm, 2.2 mm, 2.5 mm, 2.6 mm, 2.8 mm, 2.9 mm, and 3 mm.

In the embodiments, in the radial direction of the connection ring 323, the dimension of the step 3231 is set to 0.5 mm to 3 mm, which helps further balance connection reliability of the connection main body 322 and the connection ring 323 and a decrease in occupied space.

In some embodiments, with reference to FIG. 7 and FIG. 8, in a direction perpendicular to the radial direction of the connection ring 323, the dimension of the step 3231 is 0.2 mm to 10 mm.

In the direction perpendicular to the radial direction of the connection ring 323, the dimension of the step 3231 may be a specific value of any one of or a specific value between any two of 0.2 mm, 0.3 mm, 0.4 mm, 0.5 mm, 1 mm, 2 mm, 3 mm, 4 mm, 5 mm, 6 mm, 7 mm, 8 mm, 9 mm, and 10 mm.

In the embodiments, in the direction perpendicular to the radial direction of the connection ring 323, the dimension of the step 3231 is set to 0.2 mm to 10 mm, which not only helps make the step 3231 have certain structural strength, but also can reduce space occupied by the step 3231 in the heat exchange flow channel 311 as much as possible, thereby improving heat exchange efficiency. In other words, structural strength of the step 3231 and a decrease in occupied space can be balanced.

In some embodiments, with reference to FIG. 7 and FIG. 8, in a direction perpendicular to the radial direction of the connection ring 323, the dimension of the step 3231 is 1 mm to 3 mm.

In the direction perpendicular to the radial direction of the connection ring 323, the dimension of the step 3231 may be a specific value of any one of or a specific value between any two of 1 mm, 1.2 mm, 1.3 mm, 1.4 mm, 1.5 mm, 1.6 mm, 1.8 mm, 2 mm, 2.3 mm, 2.4 mm, 2.5 mm, 2.6 mm, 2.7 mm, 2.8 mm, 2.9 mm, and 3 mm.

In the embodiments, in the direction perpendicular to the radial direction of the connection ring 323, the dimension of the step 3231 is set to 1 mm to 3 mm, which helps further balance structural strength of the step 3231 and a decrease in occupied space.

In some embodiments, the end portion of the connection main body 322 is welded and/or adhesively connected to the step 3231.

Here, the step 3231 is formed in the connection ring 323, and the end portion of the connection main body 322 abuts against the step 3231, which helps implement connection between the end portion of the connection main body 322 and the step 3231.

For example, the connection ring 323 may be made of a light-transmitting material, that is, a light-transmitting structural member, whereas the connection main body 322 may be made of a light-absorbing material. Laser welding is used, and laser can pass through the connection ring 323, and energy is absorbed at a contact surface between the connection main body 322 and the connection ring 323, causing a temperature rise, thereby achieving an effect of heating and welding.

In the embodiments, an end of the connection main body 322 extends into the connection ring 323 and is welded to the connection ring 323. This connection manner is simple and reliable.

Certainly, in some other implementations, the connection main body 322 may be adhesively connected to the connection ring 323.

In some embodiments, with reference to FIG. 3, FIG. 4, and FIG. 8, the connection main body 322 includes a first connection segment 3222 and a second connection segment 3223, an extension direction of the first connection segment 3222 is perpendicular to the radial direction of the connection ring 323, an extension direction of the second connection segment 3223 is perpendicular to the extension direction of the first connection segment 3222, and the first connection segment 3222 is connected to the connection ring 323.

Here, the first connection segment 3222, the second connection segment 3223, and the connection ring 323 jointly form a connection channel 321.

The connection main body 322 includes the first connection segment 3222 and the second connection segment 3223, the first connection segment 3222 is connected to the second connection segment 3223, and extension directions of the first connection segment 3222 and the second connection segment 3223 are perpendicular to each other, that is, the connection main body 322 has an L-shaped structure. In this way, the rigid connector 32 can be conveniently connected to the flexible member 31 and the entire vehicle pipeline.

In the embodiments, the rigid connector 32 can be configured to include the connection main body 322 and the connection ring 323, and the connection main body 322 and the connection ring 323 jointly form the connection channel 321. This facilitates connection of the rigid connector 32 to the flexible member 31 through the connection ring 323 and connection of the rigid connector 32 to the connection ring 323 through the connection main body 322, thereby implementing connection between the rigid connector 32 and the flexible member 31. This improves assembly efficiency of the connection between the rigid connector 32 and the flexible member 31, and is applicable to a rigid connector 32 with a complex structure.

In some embodiments, with reference to FIG. 3 to FIG. 8, a flange 3221 is formed on a circumferential side wall of the rigid connector 32, and the flange 3221 is connected to the outer wall of the flexible member 31 located at the edge of the connection port 312.

In the embodiments, the flange 3221 is formed on the circumferential side wall of the rigid connector 32, so that the flange 3221 can play a positioning role in a process of connecting the rigid connector 32 to the flexible member 31, thereby improving assembly efficiency. In addition, the flange 3221 is connected to the outer wall of the flexible member 31 located at the edge of the connection port 312, which helps improve connection reliability between the rigid connector 32 and the flexible member 31.

In some embodiments, the at least two flexible members 31 are configured as metal plasticized films.

The flexible member 31 is a single-layer or multi-layer film.

Here, the metal plasticized film is a metal-plastic composite material, that is, including a metal layer and a plastic layer.

In the embodiments, because the metal plasticized film is thin and lightweight, and because the heat exchange flow channel 311 is formed between the at least two metal plasticized films, the heat exchange flow channel is not constrained by an extrusion process and does not require a large thickness. Therefore, the overall thickness and weight of the heat exchange assembly 30 can be reduced. In addition, because the metal plasticized film has the characteristic of insulation, a risk of insulation failure can be reduced. This reduces a risk of reaction between the heat exchange assembly 30 and the heat exchange medium flowing inside, thereby further reducing a risk of corrosion and leakage of the heat exchange medium.

For example, the at least two flexible members 31 are configured as aluminum-plastic films.

The aluminum-plastic film has a high barrier property, good cold-stamping formability, puncture resistance, stability against electrolyte solution, and an electrical insulation property.

In some embodiments, the flexible member 31 is of a layered structure, the flexible member 31 includes a metal layer and a non-metal layer, and the metal layer and the non-metal layer are sequentially stacked.

Here, the flexible member 31 includes a metal layer and a non-metal layer, that is, the flexible member 31 is a composite material member composed of a metal layer and a non-metal layer.

For example, the metal layer and the non-metal layer may be formed through hot pressing or hot melting.

Here, quantities of both metal layers and non-metal layers are not limited.

In the embodiments, the flexible member 31 including the metal layer and the non-metal layer sequentially stacked is thin and lightweight, and by forming the heat exchange flow channel 311 between the at least two flexible members 31, the heat exchange flow channel is not constrained by an extrusion process and does not require a large thickness. Therefore, the overall thickness and weight of the heat exchange assembly 30 can be reduced. Furthermore, the heat exchange assembly 30 does not react with the heat exchange medium flowing inside, and thus there is no risk of corrosion or leakage.

In some embodiments, the metal layer includes one or a plurality of aluminum foil, copper foil, and steel foil.

By configuring the metal layer to be one or a plurality of aluminum foil, copper foil, and steel foil, the flexible member 31 can be made to have certain structural strength and play an isolation role.

In some embodiments, the non-metal layer includes one or a plurality of polypropylene, polyvinyl chloride, and polyethylene.

By configuring the non-metal layer to be one or a plurality of polypropylene, polyvinyl chloride, and polyethylene, the flexible member 31 can be made to have a certain waterproof effect.

For example, a non-metal layer of a corrosion-resistant material having acid and alkali corrosion resistance may alternatively be selected, or an additive may be added to the non-metal layer, so that the non-metal layer has acid and alkali corrosion resistance.

In some embodiments, the non-metal layer is a hot-melt layer.

Here, the non-metal layer is configured as a hot-melt layer, that is, made of a hot-melt material, which facilitates bonding the non-metal layer to the metal layer through hot melting, resulting in simple molding and high production efficiency.

In some embodiments, the flexible member 31 is of a layered structure, the flexible member 31 includes a corrosion-resistant layer, an isolation layer, and a waterproof layer that are sequentially arranged, and the waterproof layer is closer to the heat exchange flow channel 311 than the corrosion-resistant layer.

Here, the corrosion-resistant layer may be a nylon layer formed from a nylon material to have certain corrosion resistance, for example, acid and alkali corrosion resistance.

The isolation layer may be a metal layer, and the metal layer may be configured as one or a plurality of aluminum foil, copper foil, and steel foil, so that the flexible member 31 has certain structural strength and can play an isolation role.

The waterproof layer may be a non-metal layer, and the non-metal layer may be configured as one or a plurality of polypropylene, polyvinyl chloride, and polyethylene, so that the flexible member 31 has a certain waterproof effect.

In the embodiments, the flexible member 31 is configured to include the corrosion-resistant layer, the isolation layer, and the waterproof layer that are sequentially arranged, and the waterproof layer is closer to the heat exchange flow channel 311 than the corrosion-resistant layer, which helps improve reliability of the heat exchange assembly 30.

In some embodiments, the thickness of the isolation layer is 6.5 µm to 100 µm.

The thickness of the isolation layer may be a specific value of any one of or a specific value between any two of 6.5 µm, 10 µm, 15 µm, 20 µm, 25 µm, 30 µm, 35 µm, 38 µm, 40 µm, 45 µm, 50 µm, 55 µm, 60 µm, 65 µm, 70 µm, 75 µm, 80 µm, 85 µm, 90 µm, 92 µm, 95 µm, and 100 µm.

In the embodiments, by setting the thickness of the isolation layer to 6.5 µm to 100 µm, the flexible member 31 can be made to have certain structural strength and flexibility.

In some embodiments, the thickness of the isolation layer is 6.5 µm to 15 µm.

The thickness of the isolation layer may be a specific value of any one of or a specific value between any two of 6.5 µm, 7 µm, 7.5 µm, 7.8 µm, 8 µm, 8.3 µm, 8.5 µm, 8.8 µm, 9 µm, 9.2 µm, 9.5 µm, 9.7 µm, 10 µm, 10.3 µm, 10.5 µm, 10.8 µm, 11 µm, 11.5 µm, 11.8 µm, 12 µm, 12.3 µm, 12.5 µm, 13 µm, 13.5 µm, 14 µm, 14.5 µm, and 15 µm.

In the embodiments, by setting the thickness of the isolation layer to 6.5 µm to 15 µm, the flexible member 31 can further be made to have certain structural strength and flexibility.

In some embodiments, the thickness of the corrosion-resistant layer is 5 µm to 20 µm.

The thickness of the corrosion-resistant layer may be a specific value of any one of or a specific value between any two of 5 µm, 5.5 µm, 5.8 µm, 6 µm, 6.5 µm, 7 µm, 7.5 µm, 7.8 µm, 8 µm, 8.3 µm, 8.5 µm, 8.8 µm, 9 µm, 9.2 µm, 9.5 µm, 9.7 µm, 10 µm, 10.3 µm, 10.5 µm, 10.8 µm, 11 µm, 11.5 µm, 11.8 µm, 12 µm, 12.3 µm, 12.5 µm, 13 µm, 13.5 µm, 14 µm, 14.5 µm, 15 µm, 15.5 µm, 16 µm, 16.5 µm, 17 µm, 17.5 µm, 18 µm, 18.5 µm, 18.7 µm, 19 µm, 19.5 µm, and 20 µm.

In the embodiments, by setting the thickness of the corrosion-resistant layer to 5 µm to 20 µm, wear resistance and toughness of the flexible member 31 can be improved.

In some embodiments, the thickness of the waterproof layer is 50 µm to 120 µm.

The thickness of the waterproof layer may be a specific value of any one of or a specific value between any two of 50 µm, 55 µm, 60 µm, 65 µm, 70 µm, 75 µm, 80 µm, 85 µm, 90 µm, 92 µm, 95 µm, 100 µm, 105 µm, 108 µm, 110 µm, 115 µm, and 120 µm.

In the embodiments, the thickness of the waterproof layer is set to 50 µm to 120 µm, which can not only make the waterproof layer have certain structural strength to improve waterproof performance thereof, but also facilitate hot-press connection of the flexible member 31 through the waterproof layer.

In some embodiments, the thickness of the flexible member 31 is 0.05 mm to 0.3 mm.

For example, the thickness is a specific value of any one of or a specific value between any two of 0.05 mm, 0.06 mm, 0.07 mm, 0.08 mm, 0.09 mm, 0.1 mm, 0.15 mm, 0.2 mm, 0.21 mm, 0.22 mm, 0.25 mm, 0.27 mm, 0.28 mm, and 0.3 mm.

In the embodiments, the thickness of the flexible member 31 is set to 0.05 mm to 0.3 mm, so that the overall thickness of the heat exchange assembly 30 is made to be small while the heat exchange assembly 30 made of the flexible member 31 has certain structural strength, which helps reduce the overall volume and weight of the battery apparatus 100 to increase energy density of the battery apparatus 100.

In some embodiments, the thickness of the flexible member 31 is 0.08 mm to 0.2 mm.

For example, the thickness is a specific value of any one of or a specific value between any two of 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, and 0.2 mm.

In the embodiments, the thickness of the flexible member 31 is set to 0.08 mm to 0.2 mm, so that the overall thickness of the heat exchange assembly 30 is further made to be small while the heat exchange assembly 30 made of the flexible member 31 has certain structural strength, which helps further reduce the overall volume and weight of the battery apparatus 100 to further increase energy density of the battery apparatus 100.

In some embodiments, the elastic modulus of the flexible member 31 is 0.1 MPa to 10,000 MPa.

For example, the elastic modulus of the flexible member 31 may be a specific value of any one of or a specific value between any two of 0.1 MPa, 1 MPa, 50 MPa, 100 MPa, 150 MPa, 200 MPa, 300 MPa, 500 MPa, 800 MPa, 1000 MPa, 1300 MPa, 1500 MPa, 1800 MPa, 2000 MPa, 2500 MPa, 2800 MPa, 3000 MPa, 3500 MPa, 4000 MPa, 4500 MPa, 5000 MPa, 5500 MPa, 6000 MPa, 6500 MPa, 7000 MPa, 7500 MPa, 8000 MPa, 8500 MPa, 8800 MPa, 9000 MPa, 9500 MPa, 9700 MPa, and 10000 MPa.

The elastic modulus describes the magnitude of unit strain caused by unit stress when a solid is subjected to force within a certain range, and is one of the fundamental physical quantities of a material. The greater the elastic modulus is, the greater the stiffness of the material is, and the greater the resistance to compression is. The elastic modulus is a physical quantity that describes the elasticity of a substance.

In the embodiments, the elastic modulus of the flexible member 31 is set to 0.1 Mpa to 10,000 Mpa. This makes the flexible member 31 not only have certain structural strength to improve reliability of the heat exchange assembly 30, but also have certain deformation capability to increase a fit degree between the heat exchange assembly 30 and the case assembly 20 and/or the battery cell assembly 10, thereby increasing an effective heat exchange area between the heat exchange assembly 30 and the case assembly 20 and/or the battery cell assembly 10, and improving heat exchange efficiency and a heat exchange effect of the heat exchange assembly 30.

In a specific embodiment, the flexible member 31 is of a layered structure, the flexible member 31 includes a corrosion-resistant layer, an isolation layer, and a waterproof layer that are sequentially arranged, and the waterproof layer is closer to a medium flow channel 32 than the corrosion-resistant layer. The thickness of the isolation layer is 6.5 µm to 15 µm. The thickness of the corrosion-resistant layer is 5 µm to 20 µm. The thickness of the waterproof layer is 50 µm to 120 µm. The thickness of the flexible member 31 is 0.05 mm to 0.3 mm. The elastic modulus of the flexible member 31 is 0.1 MPa to 10,000 MPa.

It should be noted that the outer diameter of the flange 3221, the outer diameter of the connection ring 323, the dimension of the connection region between the connection ring 323 and the flexible member 31 in the radial direction of the connection ring 323, the dimension of the connection main body 322 extending into the connection ring 323, the dimension of the step 3231 in the radial direction of the connection ring 323, the dimension of the step 3231 in the direction perpendicular to the radial direction of the connection ring 323, the thickness of the flexible member 31, and the like can be measured by using a micrometer, a dynamometer, a snap gauge, a vernier caliper, or the like. It should be noted that all the foregoing measurements can be performed at normal temperature and normal pressure.

A method for measuring the elastic modulus of the flexible member 31 may include at least one of a static tensile test method, a dynamic test method, a sound velocity method, a nanoindentation method, and a bending method. The measuring instrument may include a nanoindenter and a universal testing machine.

For example, at normal temperature and normal pressure, the elastic modulus of the flexible member 31 may be measured by using a nanoindentation method. The nanoindentation method uses a tiny indenter to indent the surface of the flexible member 31, and calculates the elastic modulus by analyzing a relationship between an indentation depth and a load.

In the description of the present disclosure, references to terms such as "in one embodiment", "in some embodiments", "in some other embodiments", "in still some other embodiments", or "for example" mean that specific features, structures, materials, or characteristics described with reference to the embodiment or example are included in at least one embodiment or example of the embodiments of the present disclosure. In the present disclosure, the schematic descriptions of the foregoing terms are not necessarily directed to the same embodiment or example. Moreover, the described specific features, structures, materials, or characteristics may be combined in a suitable manner in any one or more embodiments or examples. In addition, a person skilled in the art can incorporate the different embodiments or examples described in the present disclosure and the features of different embodiments or examples without conflicting with each other.

The foregoing descriptions are merely preferable embodiments of the present disclosure, and are not intended to limit the present disclosure. For a person skilled in the art, various modifications and changes may be made to the present disclosure. Any modification, equivalent replacement, or improvement made without departing from the spirit and principle of the present disclosure shall fall within the protection scope of the present disclosure.

## Claims

1. A battery apparatus, comprising:
a case assembly;
a battery cell assembly arranged in the case assembly; and
a heat exchange assembly configured to exchange heat with the battery cell assembly, wherein
the heat exchange assembly comprises a rigid connector and at least two flexible members, the at least two flexible members are stacked, a heat exchange flow channel is formed between the flexible members, and the heat exchange flow channel is configured to conduct a heat exchange medium; and the rigid connector is provided with a connection channel, the rigid connector is connected to the flexible members, and the connection channel is communicated with the heat exchange flow channel.

2. The battery apparatus according to claim 1, wherein the flexible member is formed with a connection port communicated with the heat exchange flow channel, and the rigid connector is hot-press connected to the inner wall of the flexible member located at the edge of the connection port.

3. The battery apparatus according to claim 1, wherein the flexible member is formed with a connection port communicated with the heat exchange flow channel, the rigid connector comprises a connection main body and a connection ring, at least a portion of the connection ring is arranged in the heat exchange flow channel, and the connection ring is connected to the inner wall of the flexible member located at the edge of the connection port.

4. The battery apparatus according to claim 3, wherein the connection ring is hot-press connected to the inner wall of the flexible member located at the edge of the connection port.

5. The battery apparatus according to claim 3, wherein an end of the connection main body extends into the connection ring and is connected to the connection ring.

6. The battery apparatus according to claim 5, wherein the connection main body is welded and/or adhesively connected to the connection ring.

7. The battery apparatus according to any one of claims 3 to 6, wherein a flange is formed on a circumferential side wall of the connection main body, and the flexible members are sandwiched between the flange and the connection ring.

8. The battery apparatus according to claim 7, wherein the flange is connected to the flexible member.

9. The battery apparatus according to claim 8, wherein the flange is hot-press connected and/or adhesively connected to the flexible member.

10. The battery apparatus according to claim 7, wherein the difference obtained by subtracting the outer diameter of the connection ring from the outer diameter of the flange is 0.2 mm to 30 mm.

11. The battery apparatus according to claim 10, wherein the difference obtained by subtracting the outer diameter of the connection ring from the outer diameter of the flange is 2 mm to 5 mm.

12. The battery apparatus according to any one of claims 3 to 11, wherein in the radial direction of the connection ring, the dimension of a connection region between the connection ring and the flexible member is greater than or equal to 0.2 mm.

13. The battery apparatus according to claim 12, wherein in the radial direction of the connection ring, the dimension of the connection region between the connection ring and the flexible member is 1 mm to 30 mm.

14. The battery apparatus according to any one of claims 3 to 13, wherein an end of the connection main body extends into the connection ring and is connected to an inner side wall of the connection ring; and the dimension of the connection main body extending into the connection ring is greater than or equal to 0.2 mm to 20 mm.

15. The battery apparatus according to any one of claims 3 to 14, wherein a portion of the inner side wall of the connection ring extends inward in the radial direction to form a step, and an end portion of the connection main body abuts against the step.

16. The battery apparatus according to claim 15, wherein in the radial direction of the connection ring, the dimension of the step is 0.2 mm to 10 mm.

17. The battery apparatus according to claim 16, wherein in the radial direction of the connection ring, the dimension of the step is 0.5 mm to 3 mm.

18. The battery apparatus according to any one of claims 15 to 17, wherein in a direction perpendicular to the radial direction of the connection ring, the dimension of the step is 0.2 mm to 10 mm.

19. The battery apparatus according to claim 18, wherein in the direction perpendicular to the radial direction of the connection ring, the dimension of the step is 1 mm to 3 mm.

20. The battery apparatus according to any one of claims 15 to 19, wherein the end portion of the connection main body is welded and/or adhesively connected to the step.

21. The battery apparatus according to any one of claims 3 to 20, wherein the connection main body comprises a first connection segment and a second connection segment, an extension direction of the first connection segment is perpendicular to the radial direction of the connection ring, an extension direction of the second connection segment is perpendicular to the extension direction of the first connection segment, and the first connection segment is connected to the connection ring.

22. The battery apparatus according to any one of claims 2 to 21, wherein a flange is formed on a circumferential side wall of the rigid connector, and the flange is connected to the outer side wall of the flexible member located at the edge of the connection port.

23. The battery apparatus according to any one of claims 1 to 22, wherein the at least two flexible members are configured as metal plasticized films.

24. The battery apparatus according to claim 23, wherein the at least two flexible members are configured as aluminum-plastic films.

25. The battery apparatus according to any one of claims 1 to 24, wherein the flexible member is of a layered structure, the flexible member comprises a metal layer and a non-metal layer, and the metal layer and the non-metal layer are sequentially stacked.

26. The battery apparatus according to claim 25, wherein the metal layer comprises one or a plurality of aluminum foil, copper foil, and steel foil.

27. The battery apparatus according to claim 25 or 26, wherein the non-metal layer comprises one or a plurality of polypropylene, polyvinyl chloride, and polyethylene.

28. The battery apparatus according to any one of claims 25 to 27, wherein the non-metal layer is a hot-melt layer.

29. The battery apparatus according to any one of claims 1 to 28, wherein the flexible member is of a layered structure, the flexible member comprises a corrosion-resistant layer, an isolation layer, and a waterproof layer that are sequentially arranged, and the waterproof layer is closer to the heat exchange flow channel than the corrosion-resistant layer.

30. The battery apparatus according to claim 29, wherein the thickness of the isolation layer is 6.5 µm to 100 µm.

31. The battery apparatus according to claim 30, wherein the thickness of the isolation layer is 6.5 µm to 15 µm.

32. The battery apparatus according to any one of claims 29 to 31, wherein the thickness of the corrosion-resistant layer is 5 µm to 20 µm.

33. The battery apparatus according to any one of claims 29 to 32, wherein the thickness of the waterproof layer is 50 µm to 120 µm.

34. The battery apparatus according to any one of claims 1 to 33, wherein the thickness of the flexible member is 0.05 mm to 0.3 mm.

35. The battery apparatus according to claim 34, wherein the thickness of the flexible member is 0.08 mm to 0.2 mm.

36. The battery apparatus according to any one of claims 1 to 35, wherein the elastic modulus of the flexible member is 0.1 MPa to 10,000 MPa.

37. A heat exchange assembly, wherein the heat exchange assembly is the heat exchange assembly of the battery apparatus according to any one of claims 1 to 36, and the heat exchange assembly is configured to exchange heat with the battery cell assembly.

38. An electric device, comprising the battery apparatus according to any one of claims 1 to 36 or the heat exchange assembly according to claim 37.

39. An energy storage device, comprising the battery apparatus according to any one of claims 1 to 36 or the heat exchange assembly according to claim 37.
